(19) **Europäisches Patentamt European Patent Office Office européen des brevets**

(11) **EP 3 172 794 B1**

(12) **FASCICULE DE BREVET EUROPEEN**

(45) Date de publication et mention de la délivrance du brevet:
**29.04.2026 Bulletin 2026/18**

(21) Numéro de dépôt: **15745539.5**

(22) Date de dépôt: **23.07.2015**

(51) Classification Internationale des Brevets (IPC):
*H01M 8/0662* (2016.01)    *H01M 16/00* (2006.01)
*H01M 8/24* (2016.01)    *H01M 8/12* (2016.01)
*H01M 8/06* (2016.01)    *H01M 8/0612* (2016.01)

(52) Classification Coopérative des Brevets (CPC):
**H01M 16/006; H01M 8/0675; H01M 8/0687;**
H01M 8/0612; H01M 8/0662; H01M 2008/1293;
H01M 2220/10; H01M 2250/10; Y02B 90/10;
Y02E 60/10; Y02E 60/50

(86) Numéro de dépôt international:
**PCT/FR2015/052047**

(87) Numéro de publication internationale:
**WO 2016/012728 (28.01.2016 Gazette 2016/04)**

(54) **SYSTÈME DE PRODUCTION D'ÉNERGIE ASSOCIANT UNE PILE À COMBUSTIBLE ET UNE BATTERIE RECHARGEABLE ET PROCÉDÉS METTANT EN OEUVRE UN TEL SYSTÈME**

ENERGIE PRODUZIERENDES SYSTEM AUS BRENNSTOFFZELLE UND AUFLADBARER BATTERIE, SOWIE VERFAHREN ZUM BETREIBEN EINES SOLCHEN SYSTEMS

ENERGY PRODUCING SYSTEM COMBINING A FUEL CELL AND A SECONDARY BATTERY, AND PROCESSES FOR OPERATING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2014 FR 1457127**
          **18.09.2014 FR 1458823**

(43) Date de publication de la demande:
**31.05.2017 Bulletin 2017/22**

(73) Titulaire: **ENGIE**
**92400 Courbevoie (FR)**

(72) Inventeurs:
• **GORINTIN, Louis**
  **92120 Montrouge (FR)**
• **WERLY, Julien**
  **95120 Ermont (FR)**
• **LEVEDER, Tanguy**
  **75005 Paris (FR)**

(74) Mandataire: **Novagraaf Technologies**
**2 rue Sarah Bernhardt**
**CS90017**
**92665 Asnières-sur-Seine Cedex (FR)**

(56) Documents cités:
**WO-A1-2010/103269**      **US-A- 5 332 630**
**US-A1- 2011 300 457**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention relève du domaine des systèmes récupérateurs d'énergie (généralement désignés par l'expression « *Energy Harvesting Systems* » en anglais) pour alimenter en énergie électrique des systèmes électroniques.

Plus particulièrement, la présente invention concerne un système de production d'énergie comportant une pile à combustible. La présente invention concerne également un procédé de production d'énergie et un procédé de gestion énergétique mettant en œuvre un tel dispositif.

Les systèmes électroniques, en particulier les systèmes de mesures (ou capteurs), présents dans le milieu industriel, deviennent de moins en mois consommateurs d'énergie et communiquent de plus en plus par des systèmes radiofréquences. Dans cette optique, l'autonomie énergétique de ces systèmes électroniques est une question de plus en plus abordée. Aujourd'hui, leur alimentation est assurée soit par le secteur, soit par des piles électrochimique (réaction d'oxydo-réduction). Ces solutions d'alimentation présentent un coût, des niveaux d'énergie limités et des contraintes techniques de déploiement.

L'objectif aujourd'hui est de donner à des systèmes électroniques la capacité de fonctionner pendant des années sans intervention humaine. Les produits installés veulent tous tendre vers la même philosophie de « prêt à installer » (connue en anglais par l'expression « *Install and Forget* »), l'équivalent du « prêt à tourner » (en anglais « *Plug and Play* ») des périphériques multimédias. Ces systèmes doivent dès leur installation s'intégrer dans leur environnement, aussi bien du point de vue de la communication que de l'alimentation.

La problématique des systèmes électroniques, en plus de leurs fonctions principales (capteur, actuateur), est de diminuer au maximum les coûts liés à leur alimentation en trouvant de l'énergie présente dans leur environnement.

Or l'environnement des systèmes électroniques n'est pas toujours énergétiquement riche et cette limitation de la source d'énergie limite leurs fonctionnalités.

À l'heure actuelle, il existe trois solutions pour alimenter en énergie un système électronique :

- l'alimentation par le secteur lorsqu'il est possible matériellement et financièrement d'amener un câble jusqu'au système à alimenter ;

  - l'alimentation par pile d'oxydo-réduction ;
  - l'alimentation par un système de récupération d'énergie (« *Energy Harvesting* » en anglais) qui récupère l'énergie présente dans l'environnement. Cette source d'énergie peut être radiative, thermique, mécanique, ou chimique. Pour augmenter l'intervalle de temps entre deux périodes de maintenance, une solution d'alimentation par des batteries rechargées grâce à l'énergie récupérée dans le milieu ambiant via un transducteur peut être envisagée.

Dans le cas d'un système électronique alimenté par le secteur, cette solution présente les inconvénients suivants :

- Inconvénient matériel : un système placé dans un endroit difficilement accessible ne permet pas d'installer des câbles pour l'alimenter.
- Inconvénient financier : le coût d'une telle alimentation devient prohibitif lorsque le système se trouve loin du réseau électrique.

La solution d'une alimentation des systèmes électroniques par piles présente également des inconvénients, et en particulier :

- la durée de vie du système, sans maintenance, dépend de la durée de vie des piles qui est liée à leur technologie, leur capacité en fonction de la consommation du système électronique, leur volume qui empêche de les installer lorsque la place disponible est réduite, et leur poids ;
- le coût de la maintenance qui nécessite plusieurs fois le remplacement des piles durant le cycle de vie du système électronique

La solution de récupération d'énergie de type *« Energy Harvesting »* des énergies radiatives, mécaniques et thermiques présente aussi des inconvénients, et en particulier:

- l'énergie disponible est dépendante de l'environnement ;
- l'énergie présente dans l'environnement n'est pas toujours suffisante,
- la quantité d'énergie peut être limitée en termes de puissance maximale ;
- l'évaluation et la prédiction de l'énergie disponible peuvent parfois être complexes.

Les réseaux d'acheminement de gaz représentent par le gaz qu'ils transportent une source d'énergie illimitée pour les capteurs installés sur ces réseaux. Des solutions de piles à combustible fonctionnant au gaz naturel existent. Par exemple, US 2011/0300457 décrit un système de pile à combustible comprenant au moins une unité de pile à combustible pour générer de l'énergie électrique et au moins un composant, en amont et/ou en aval de ladite unité de pile à combustible dans le trajet d'écoulement de l'anode, ledit composant empêchant, en tant que barrière de réoxydation, la réoxydation des parties des sections d'anode ou des sections d'anode dans leur ensemble en cas d'entrée d'un gaz oxydant. US 5,332,630, quant à lui, décrit un système d'alimentation pour alimenter un moteur électrique dans un véhicule électrique qui comprend une batterie rechargeable connectée au moteur pour entraîner le moteur et un ensemble pile à combustible connecté à la batterie pour recharger la batterie. Cependant, elles sont mal adaptées aux solutions d'alimentation de petits systèmes électroniques et fonctionnent la plupart du temps à haute température et ont des durées de vie en fonctionnement limitée. La difficulté repose ici sur trois points :

- difficulté d'avoir une pile à combustible qui fonctionne au gaz naturel avec l'ensemble de ces composants,
- durée de vie des piles à combustible, notamment à oxyde solide (communément désignée par l'acronyme SOFC pour l'expression en anglais « *Solid Oxide Fuel cell* ») qui n'est aujourd'hui pas techniquement suffisant pour fonctionner en continu sur un réseau de gaz,
- problèmes de fonctionnement des piles à combustible de types SOFC liés à la présence d'éléments soufrés dans le gaz naturel.

Parmi les trois solutions susmentionnées pour alimenter en énergie un système électronique, la troisième solution de récupération d'énergie de type *« Energy Harvesting »* est actuellement la plus intéressante pour alimenter des systèmes électroniques, aussi bien en termes de logistique que de coût. La limitation des énergies radiatives, mécaniques et thermiques reste l'énergie disponible dans l'environnement.

Dans le cadre de l'alimentation d'un système électronique présent sur un réseau de gaz naturel, la source d'énergie disponible dans l'environnement des canalisations, présente en abondance et sans limitation, reste le gaz naturel.

Cependant, l'exploiter est problématique, car les piles à combustible ont une durée de vie limitée et demandent des systèmes de reformages à haute température et souvent compliqués à faire fonctionner à basse température sans un apport énergétique tiers (raccordement électrique).

Pour résoudre les défauts et inconvénients susmentionnés, le déposant a mis au point un système de production d'énergie associant une pile à combustible et une batterie rechargeable, dans lequel la pile à combustible peut fonctionner avec le gaz utilisé sur un réseau de gaz standard et être alimentée avec l'oxygène de l'air. Un tel dispositif permet d'alimenter en continuité un consommateur d'énergie, tel qu'un système électronique tel qu'un système de mesure (capteur), de radiocommunication, un actionneur, un système d'alarme mécanique, sonore ou lumineuse.

Par alimentation en continuité d'un consommateur d'énergie, on entend, au sens de la présente demande, une alimentation du consommateur d'énergie sans interruption possible ni de rupture d'approvisionnement dans l'alimentation, et non une alimentation continue avec un courant.

Par réseau de gaz, on entend, au sens de la présente demande, un réseau de distribution de gaz, mais aussi les réseaux de gaz internes aux installations civiles ou industrielles, le réseau de transport de gaz, les stockages de gaz, les systèmes d'approvisionnement en gaz naturel liquéfié (GNL) et les plates-formes d'extraction de pétrole et de gaz.

L'association d'une pile à combustible et d'un dispositif de stockage d'énergie électrique est connue de l'art antérieur.

Ainsi, la demande internationale WO 2007/142169 décrit notamment une pile à combustible comprenant un condensateur pour emmagasiner de l'énergie électrique, et le procédé pour utiliser ladite pile. Toutefois, ce brevet décrit l'utilisation de l'énergie électrique stockée pour la pile elle-même et non pour alimenter un autre organe, comme c'est le cas dans la présente invention. En outre, WO 2007/142169 ne décrit pas le dimensionnement du couple pile/batterie et son fonctionnement en relation avec le dimensionnement.

La présente invention a donc pour objet un système de production d'énergie selon la revendication 3.

Le système de production d'énergie selon l'invention est une solution de récupération d'énergie ambiante, car elle permet d'éviter d'utiliser une réserve d'énergie et donc limite les opérations de maintenance ou de rechargement. Il n'y a donc pas de stockage de gaz au niveau du système de production d'énergie selon l'invention.

De plus, si le système de production d'énergie selon l'invention est apte à alimenter en continuité un consommateur d'énergie, par contre la pile à combustion dans ce système ne fonctionne pas en continu, mais de manière intermittente, c'est-à-dire uniquement pour recharger le système de stockage électrique (batterie en général), la fréquence de cette recharge pouvant être comprise entre quelques heures et un an en fonction de la consommation du système électronique à alimenter. La réserve d'énergie est donc dimensionnée de sorte que son niveau de décharge souhaité soit atteint à la fin de cette période. En effet, une pile à combustible a une durée de vie limitée dans le temps par deux phénomènes :

- le nombre de cycles marche/arrêt
- la durée de fonctionnement

En revanche, une pile à combustible n'a pas de durée de vie calendaire. Cela signifie qu'une pile à combustible peut, en théorie, ne jamais avoir fonctionné durant 10 ans et disposer du même nombre de cycles marche/arrêt et du même nombre d'heures de fonctionnement comme si elle était neuve.

La durée de vie d'une pile à combustible peut être comprise entre 1 000 et 100 000 heures pour les plus performantes, mais typiquement, la durée de vie d'une pile à combustible est de l'ordre de 5 000 heures. Dans la mesure où il y a dans une année 8 760 heures, une pile à combustible ayant une durée de vie de fonctionnement de 5 000 heures ne peut pas fonctionner plus d'une année en continu.

Avec le système de production d'énergie selon l'invention associant une pile à combustible SOFC à un système de stockage d'énergie électrique tel qu'une batterie, il est possible de stocker l'énergie produite sans avoir à fournir de l'énergie en permanence.

Par ailleurs, une pile à combustible utilisée seule a un temps de réaction bien trop long (typiquement de plusieurs secondes) par rapport aux pics de courant nécessaires pour alimenter un capteur. L'association de la pile à combustible à un système de stockage d'énergie électrique (tel qu'une batterie) dans le système de production d'énergie selon l'invention permet de faire tampon entre la quantité d'énergie demandée par le capteur et l'énergie délivrable par la pile à combustible.

Dans le système de production d'énergie selon l'invention, la pile à combustible est une pile à combustible à oxyde solide SOFC, qui permet de fonctionner avec différents types d'hydrocarbures ainsi que de l'hydrogène. Elle comprend un système de reformage pour transformer des hydrocarbures en hydrogène.

Le gaz alimentant l'unité de production d'énergie peut être du gaz naturel, un gaz naturel liquéfié, un gaz d'évaporation issu du GNL, un gaz de ville, un biogaz, du biométhane, du méthane de synthèse ou de l'hydrogène.

Par biogaz, on entend, au sens de la présente demande un gaz issu de la méthanation de la biomasse ou bio gaz de deuxième génération.

Le contrôle de la dérivation raccordant la pile à combustible au conduit d'admission peut être réalisé par un actionneur ou par perméation. Ce système de dérivation permet de récupérer le comburant dans la canalisation.

De manière avantageuse, la pile à combustible à oxyde solide SOFC du système de production d'énergie selon l'invention peut être isolée thermiquement par un système d'isolation thermique et peut comporter un système de chauffage (la montée et le maintien en température se faisant par chauffage électronique ou chimique (combustion pour chauffer ladite pile à combustible.

Pour cela, la pile à combustible à oxyde solide comporte de préférence une structure tubulaire ou microtubulaire, qui consiste en un système de forme tubique. Ce format est plus résistant aux dilatations thermiques des matériaux et contraintes mécaniques associées, et permet donc d'éviter le vieillissement accéléré lié à ces phénomènes de dilatation thermiques. D'autres architectures ne sont cependant pas exclues de la présente invention.

De manière avantageuse, le dispositif de gestion du système de stockage d'énergie électrique peut être un dispositif électronique de gestion de l'alimentation en énergie de la pile à combustible.

De manière avantageuse, le système de production d'énergie selon l'invention peut comporter en entrée du conduit d'admission de gaz et en amont de la pile à combustible un filtre de désulfuration passif permettant d'éliminer les molécules soufrées présentes dans le gaz, qui sont nuisibles au fonctionnement de la pile à combustible.

De manière avantageuse, le système de production d'énergie selon l'invention peut en outre comporter un système d'évacuation ou un système de traitement des effluents produits par la pile à combustible ($CO_2$, $H_2O$ et $O_2$). Un système d'évacuation des effluents permet d'éviter des rejets d'effluents qui auraient un caractère dangereux pour une tierce personne ou pour le réseau de gaz.

La présente invention a également pour objet un procédé selon la revendication 1.

De manière avantageuse, dans le procédé de gestion énergétique, le module de gestion peut démarrer la pile à combustible lorsque le système de stockage d'énergie électrique est déchargé à hauteur d'un seuil compris entre 60 et 99% de la capacité de stockage, et de préférence compris entre 70 et 90% de la capacité de stockage pour une durée d'alimentation comprise entre 5 et 20 ans.

La présente description a également pour objet un procédé de production d'énergie mettant en œuvre un système de production d'énergie destiné à être raccordé à un réseau de gaz, ledit système de production d'énergie comprenant :

- un conduit d'admission du gaz en provenance dudit réseau dans ledit système de production d'énergie,
- un conduit d'évacuation des effluents,
- une unité de production d'énergie comprenant une pile à combustible à oxyde solide SOFC, qui est

  ∘ alimentée en gaz par une dérivation raccordée audit conduit d'admission, et

○ alimentée en oxygène par un conduit d'admission en air,

- un système de stockage d'énergie électrique rechargeable associée à ladite pile à combustible,
- un module de gestion comportant un dispositif de gestion de ladite pile à combustible et un dispositif de gestion dudit système de stockage électrique pour en contrôler la charge,

ledit procédé étant caractérisé en ce que la pile à combustible alimente en continuité un consommateur d'énergie consommant en moyenne une énergie comprise entre 1mW et 1 W

Dans le procédé de production d'énergie, le système de stockage d'énergie peut également servir à allumer la pile à combustible et la rallumer si besoin est.

De préférence, dans le procédé de production d'énergie, la pile à combustible peut alimenter en continuité un consommateur d'énergie consommant en moyenne une énergie comprise entre 1mW et 100 mW. En dessous de 1 mW, la solution d'une alimentation par le système de production d'énergie selon l'invention n'est plus économiquement compétitive et au-dessus de 100 mW, les contraintes techniques deviennent trop importantes.

Que ce soit pour le procédé de gestion énergétique selon l'invention ou le procédé de production d'énergie, la pile à combustible peut avantageusement comporter un système d'isolation thermique et un système de chauffage pour chauffer ladite pile à combustible.

Pour cela, la pile à combustible à oxyde solide pourra comporter de préférence une structure tubulaire ou microtubulaire, qui consiste en un système de forme tubique. Ce format est plus résistant aux dilatations thermiques des matériaux et contraintes mécaniques associées, et permet donc d'éviter le vieillissement accéléré lié à ces phénomènes de dilatation thermiques.

De manière avantageuse, le dispositif d'électronique de gestion peut déclencher la mise en marche de la pile à combustible lorsque la capacité du système de stockage d'énergie électrique est déchargée à hauteur d'un seuil compris entre 60 et 99% de la capacité de stockage, et de préférence compris entre 70 et 90% de la capacité de stockage, pour une durée d'alimentation comprise entre 5 et 20 ans.

De manière avantageuse, le dispositif de stockage sera dimensionné de manière à optimiser la durée d'alimentation suivant les critères de performance de la technologie de pile a combustible et du dit système de stockage d'électricités le dimensionnement minimal suit les équations ci-dessous :

Soit

$D$ la durée de vie calendaire de la pile à une puissance $P_{fct}$ de fonctionnement

$d$ la durée d'alimentation souhaité du poste de consommation

$C_{min}$ la capacité minimale de la batterie

$P$ la puissance nécessaire en continu.

$N_{PaC}$ le nombre de cycle de la pile à combustible

$N_{stock}$ le nombre de cycle du système de stockage

$$N_{min} = min (N_{PaC}, N_{stock})$$

Vaut la cyclabilité de la pile à combustible est supérieur à la cyclabilité du stockage sinon $\alpha$ (en %) Seuil de déclenchement en fonction de la technologie de batterie

$E_{pile}$ l'énergie totale pouvant être produite par la pile :

(1)

$$E_{pile}=D*P_{fct}$$

(2)

$$E_{pile} > d * P$$

(3)

$$C_{min} = \alpha * E_{pile}/N_{min}$$

Le facteur $\alpha$ est lié à la technologie de stockage électrique utilisée et doit prendre en compte :

Que ce soit pour le procédé de gestion énergétique selon l'invention ou le procédé de production d'énergie, le dispositif d'électronique de gestion du système de stockage d'énergie électrique peut en outre gérer l'alimentation en fluide de la pile à combustible et l'alimentation en énergie électrique du consommateur électrique (par exemple un capteur), comme suit : le dispositif d'électronique de gestion déclenche la mise en marche de la pile à combustible lorsque la capacité du système de stockage d'énergie électrique est déchargée à hauteur d'un seuil prédéterminé, pour une durée d'alimentation comprise entre 5 et 20 ans.

De manière avantageuse, le dispositif d'électronique de gestion peut déclencher la mise en marche de la pile à L'autodécharge du stockage électrique ;

- Capacité du stockage électrique en fonction de la température de fonctionnement ;
- Durée de vie calendaire du stockage électrique ;
- Diminution de la capacité du stockage électrique en fonction du temps ;
- Capacité du stockage électrique à fournir des pics de courant pour les appels de puissance.

En fonction des types de stockage $\alpha$ peut valoir entre 1,5 et 3.

Que ce soit pour le procédé de gestion énergétique selon l'invention ou le procédé de production d'énergie, le système de production d'énergie peut comporter en outre en amont de la pile à combustible un filtre de désulfuration passive permettant d'éliminer les molécules soufrées présentes dans le gaz.

Que ce soit pour le procédé de gestion énergétique selon l'invention ou le procédé de production d'énergie, le système de production d'énergie peut comporter en outre un système d'évacuation ou un système de traitement des effluents produits par la pile à combustible.

Que ce soit pour le procédé de gestion énergétique selon l'invention ou le procédé de production d'énergie, le gaz peut être du gaz naturel, un gaz naturel liquéfié, un gaz d'évaporation issu du GNL, un gaz de ville, un biogaz, du biométhane, du méthane de synthèse ou de l'hydrogène.

D'autres avantages et particularités de la présente invention résulteront de la description qui va suivre, donnée à titre d'exemple non limitatif et faite en référence aux figures annexées :

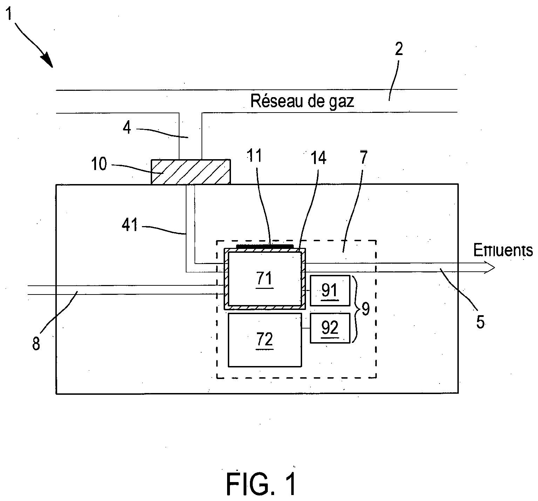

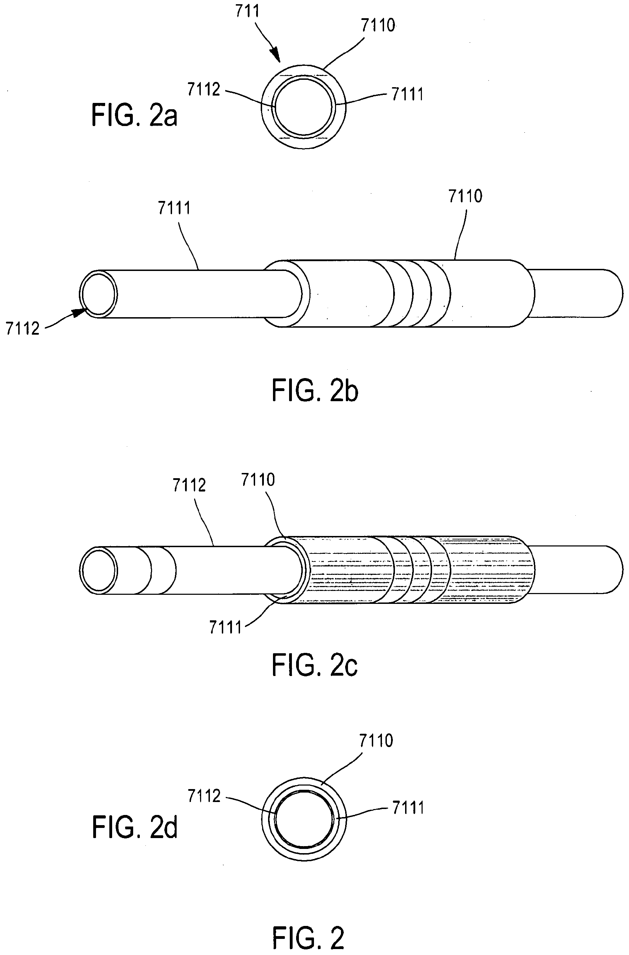

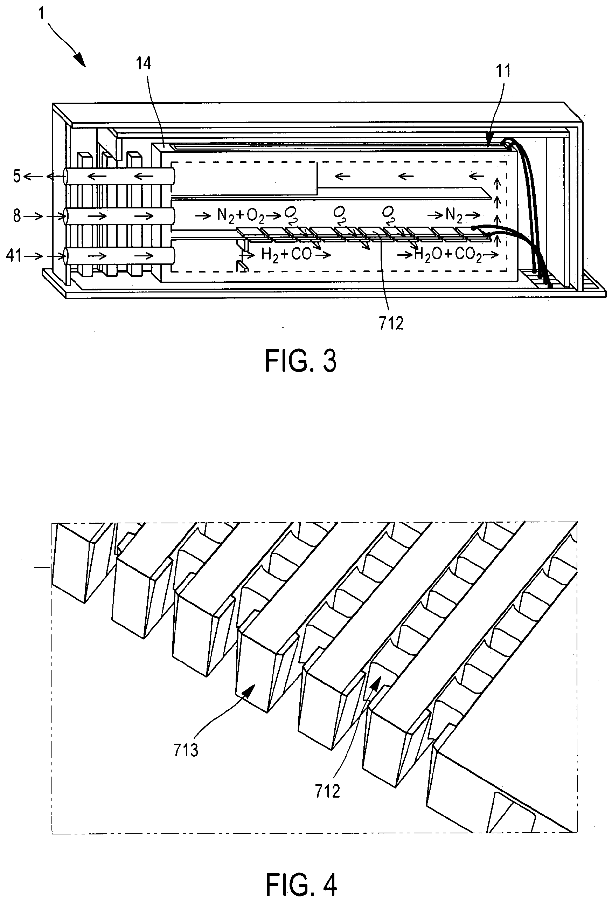

◦ la figure 1 représente un schéma de principe général du système de production d'énergie selon l'invention ;
◦ les figures 2a et 2b représentent respectivement une vue en coupe (figure 2a) et une vue latérale (figure 2b) d'un premier exemple de réalisation de pile à combustible à structure tubulaire ;
◦ les figures 2c et 2d représentent respectivement une vue latérale (figure 2c) et une vue en coupe (figure 2d) d'un deuxième exemple de réalisation de pile à combustible à structure tubulaire ;
◦ la figure 3 représente une vue schématique en coupe d'un système de production d'énergie selon une deuxième variante de réalisation de l'invention, dans lequel la pile à combustible solide a une structure microtubulaire ;
◦ la figure 4 représente une vue schématique en perspective d'un ensemble de microtubes de la pile à combustible de la figure 4.

Les éléments identiques représentés sur les figures 1 à 4 sont identifiés par des références numériques identiques.

Sur la figure 1, on a représenté un schéma de principe général du système de production d'énergie 1 selon l'invention, qui est raccordé à un réseau de gaz standard 2. La figure 1 montre que le gaz en provenance du réseau 2 est introduit, via un conduit d'admission du gaz 4 connecté au réseau de gaz 2, dans le système de production d'énergie 1. Le conduit d'admission 4 est raccordé à une dérivation 41 qui alimente en gaz, à l'intérieur du système de production d'énergie 1, une pile à combustible à oxyde solide 71 (SOFC). Celle-ci est par ailleurs alimentée en oxygène par un conduit d'admission d'air. Les effluents produits par la pile à combustible ($CO_2$, $H_2O$ et $O_2$) sont éliminés du système de production d'énergie via un conduit d'évacuation des effluents 5. Le fonctionnement de la pile à combustible 71 est géré par un dispositif de gestion 91 d'un module de gestion 9. A l'intérieur du système de production d'énergie 1, la pile à combustible 71 est associée, dans une unité de production d'énergie 7, à un système de stockage d'énergie électrique rechargeable 72, qui est géré par un dispositif de gestion spécifique 92, faisant également partie du module de gestion 9. Ce dispositif de gestion 92 permet de contrôler la charge du système de stockage électrique 72. La figure 1 montre également qu'un système d'isolation thermique 14 est placé autour de la pile à combustible 71, sur lequel 14 est disposé une résistance électrique 11.

La structure tubulaire de la pile à combustible est représentée de manière plus détaillée sur les figures 2a à 2d.

Les figures 2a et 2b représentent respectivement une vue en coupe (figure 2a) et une vue latérale (figure 2b) d'un premier exemple de réalisation de cette structure tubulaire, qui est constituée d'un tube support épais d'électrolyte 7111 (notamment en céramique), revêtu à l'extérieur d'une couche extérieure de cathode 7110 et à l'intérieur d'une fine couche d'anode 7112.

Les figures 2c et 2d représentent respectivement une vue latérale (figure 2c) et une vue en coupe (figure 2d) d'un deuxième exemple de réalisation de cette structure tubulaire, qui est constituée d'un tube support épais d'anode 7112, revêtu successivement à partir du tube d'une couche d'électrolyte 7111, puis d'une couche extérieure de cathode 7110.

La figure 3 représente une vue schématique en coupe d'un système de production 1 d'énergie selon une deuxième variante de réalisation de l'invention, dans lequel la pile à combustible solide 71 comporte une structure microtubulaire, qui est constituée de rangées microtubes 712, séparées les unes des autres par des séparateurs 713, comme illustré sur la figure 4. La figure 3 montre également qu'un système d'isolation thermique 14 est placé autour de la pile à combustible 71, sur lequel 14 est disposé une résistance électrique 11.

Les exemples suivants illustrent l'invention sans toutefois en limiter la portée.

**EXEMPLES**

EXEMPLE 1 : Alimentation d'un système de monitoring du gaz (pression débit, température) autonome en énergie.

Le système selon l'invention est utilisé pour alimenter en énergie un système d'un automate programmable industriel de suivi du gaz généralement désigné par l'acronyme RTU (pour l'anglais « *Remote Terminal Unit »),* qui transmet les informations liées aux mesures par fil ou par ondes radio. L'alimentation du système est réalisée via le réseau 220 V et, lorsque ce n'est pas possible, des piles sont utilisées.

Lorsque l'alimentation par pile est choisie, la transmission des données est réalisée par onde radiofréquence et l'autonomie énergétique dépend de l'utilisation du RTU ainsi que de la capacité des piles.

Dans le cadre d'un RTU installé sur un poste de détente, l'autonomie visée est de 2 ans et la consommation moyenne est de 20 mW. Selon l'invention, une solution d'alimentation par pile à combustible propose un cout d'acquisition deux fois supérieur à un RTU, mais un cout d'exploitation quatre fois inferieur. Le retour sur investissement est estimé à 4 ans avec ces hypothèses qui sont des hypothèses pessimistes. Par exemple, un consommateur électrique qui consomme en moyenne 20 mW, un $N_{min}$ de 250 et un facteur alpha de 1.5 nécessite une batterie de 18 Wh, si elle est rechargée tous les 15 jours et avoir une durée de vie de 10 ans.

Cet exemple montre que l'utilisation d'un système selon l'invention permet des gains d'un point de vue économique.

EXEMPLE 2 : Exemple de dimensionnement d'un système de production d'énergie selon l'invention.

Pour le dimensionnement d'un système de production d'énergie selon l'invention, le cas d'utilisation choisi essaie d'être le plus représentatif des exigences pouvant être rencontrées en termes de consommation et de durée de vie du capteur :

- la durée de vie de fonctionnement de la pile à combustible est de 5000 heures,
- le capteur, alimenté par l'intermédiaire d'une batterie, consomme 10 mA en moyenne sous 3,3 V, soit une puissance de 33 mW.

La période entre deux phases de maintenance est de 10, 15 ou 20 ans.

Le tableau 1 suivant présente la démarche suivie pour dimensionner une pile à combustible répondant au besoin en énergie du cas d'utilisation décrit dans le présent exemple. La colonne de gauche présente les questions, dans l'ordre, auxquelles il faut répondre, tandis que la colonne de droite présente trois manières différentes de répondre à ces questions pour trois périodes sans maintenances différentes (10, 15 et 20 ans).

D'après ce tableau, une pile à combustible ayant une durée de vie de fonctionnement de 5 000 heures et une puissance de 2 W peut sur 20 ans (en fonctionnant 250 h/an) alimenter un système (= recharger une batterie alimentant le capteur) qui consomme en moyenne 10 mA sous 3,3 V.

Tableau 1

| Tension de l'alimentation | 10 mA en moyenne, soit 87,6 h/an | 10 mA en moyenne, soit 87,6 h/an | 10 mA en moyenne, soit 87,6 h/an |
|---|---|---|---|
| Consommation du capteur | 3,3 V | 3,3 V | 3,3 V |
| Énergie nécessaire sur une année | 289 Wh/an | 289 Wh/an | 289 Wh/an |
| Période entre deux phases de maintenance | 10 ans | 15 ans | 20 ans |
| Durée de vie de la pile à combustible en heures de fonctionnement | 5000 heures | 5000 heures | 5000 heures |
| Nombre d'heures de fonctionnement par an pour concilier la durée de vie de la pile à combustible et l'espacement entre deux phases de maintenance | 500 heures/an | 333 heures/an | 250 heures/an |
| Puissance que doit fournir la pile à combustible lors de ses phases de fonctionnement | 0,6 W | 0,9 W | 1,2 W |
| Rendement total (en prenant en compte les différents rendements du transfert. | 64 % | 64 % | 64 % |
| Puissance réelle que doit fournir la pile à combustible lors de ses phases de fonctionnement à 50 % de sa puissance | 1,8 W | 2,8 W | 3,6 W |
| Capacité de la batterie minimale | 18 Wh | 27 Wh | 36 Wh |

**Revendications**

1. Procédé de gestion énergétique mettant en œuvre un système (1) de production d'énergie destiné à être raccordé à un réseau de gaz (2), ledit gaz étant du gaz naturel, un gaz naturel liquéfié, un gaz d'évaporation issu du GNL, un gaz de ville, un biogaz, du biométhane, du méthane de synthèse ou de l'hydrogène, ledit système (1) de production d'énergie comprenant

   - un conduit d'admission du gaz (4) en provenance dudit réseau (2) dans ledit système (1) de production d'énergie,
   - un conduit d'évacuation des effluents (5),
   - une unité de production d'énergie (7) comprenant une pile à combustible (71) à oxyde solide SOFC, qui est

      ∘ alimentée en gaz par une dérivation (41) raccordée audit conduit d'admission (4), et
      ∘ alimentée en oxygène par un conduit d'admission (8) en air,

   - un système de stockage d'énergie électrique rechargeable (72) associée à ladite pile à combustible (71), ledit système de production d'énergie alimentant en continuité un consommateur d'énergie consommant en moyenne une puissance comprise entre 1 mW et 100 mW,
   - un module de gestion (9) comportant un dispositif de gestion (91) de ladite pile à combustible (71) et un dispositif d'électronique de gestion (92) dudit système de stockage électrique (72) pour en contrôler la charge, ledit procédé étant **caractérisé en ce que** le module de gestion (9) démarre la pile à combustible (71) lorsque le système de stockage d'énergie électrique (72), présentant une énergie comprise entre 0,1 Wh et 100 Wh, est déchargé à hauteur d'un seuil prédéterminé, et **en ce que** la pile à combustible (71) fonctionne de manière intermittente, uniquement pour recharger le système de stockage électrique rechargeable (72).

2. Procédé selon la revendication 1, dans lequel le module de gestion (9) démarre la pile à combustible (71) lorsque le système de stockage d'énergie électrique (72), est déchargé à hauteur d'un seuil compris entre 60 et 99% de la capacité de stockage, pour une durée d'alimentation comprise entre 5 et 20 ans.

3. Système (1) de production d'énergie destiné à être raccordé à un réseau de gaz (2), ledit gaz étant du gaz naturel, un gaz naturel liquéfié, un gaz d'évaporation issu du GNL, un gaz de ville, un biogaz, du biométhane, du méthane de synthèse ou de l'hydrogène, ledit système (1) de production d'énergie comprenant :

- un conduit d'admission du gaz (4) en provenance dudit réseau (2) dans ledit système (1) de production d'énergie,
- un conduit d'évacuation des effluents (5),
- une unité de production d'énergie (7) comprenant une pile à combustible (71) à oxyde solide SOFC, qui est

    ◦ alimentée en gaz par une dérivation (41) raccordée audit conduit d'admission (4), et
    ◦ alimentée en oxygène par un conduit d'admission (8) en air,

- un système de stockage d'énergie électrique rechargeable (72) associée à ladite pile à combustible (71), ledit système de production d'énergie alimentant en continuité un consommateur d'énergie consommant en moyenne une puissance comprise entre 1 mW et 100 mW,
- un module de gestion (9) comportant un dispositif de gestion (91) de ladite pile à combustible (71) et un dispositif d'électronique de gestion (92) dudit système de stockage électrique (72) pour en contrôler la charge,

ledit système étant **caractérisé en ce que** le module de gestion (9) est configuré pour démarrer la pile à combustible (71) lorsque le système de stockage d'énergie électrique (72), présentant une énergie comprise entre 0,1 Wh et 100 Wh, est déchargé à hauteur d'un seuil prédéterminé et pour que la pile à combustible (71) fonctionne de manière intermittente, uniquement pour recharger le système de stockage électrique rechargeable (72).

4. Système selon la revendication 3, dans lequel la pile à combustible (71) comporte un système d'isolation thermique (14) et un système de chauffage (11) pour chauffer ladite pile à combustible (71).

5. Système selon la revendication 4, dans lequel la pile à combustible (71) comporte une structure tubulaire (711) ou microtubulaire (712).

6. Système selon l'une quelconque des revendications 3 à 5, dans lequel ledit dispositif d'électronique de gestion (92) dudit système de stockage d'énergie électrique (72) est configuré en outre pour gérer l'alimentation en fluide de la pile à combustible (71) et l'alimentation en énergie électrique du consommateur d'énergie comme suit :
ledit dispositif d'électronique de gestion (92) déclenche la mise en marche de la pile à combustible (71) lorsque la capacité du système de stockage d'énergie électrique est déchargée à hauteur d'un seuil prédéterminé, pour une durée d'alimentation comprise entre 5 et 20 ans.

7. Système selon la revendication 6, dans lequel ledit dispositif d'électronique de gestion (92) est configuré pour déclencher la mise en marche de la pile à combustible (71) lorsque la capacité du système de stockage d'énergie électrique est déchargée à hauteur d'un seuil d'un seuil compris entre 60 et 99% de la capacité de stockage, pour une durée d'alimentation comprise entre 5 et 20 ans.

8. Système selon l'une quelconque des revendications 3 à 7, dans lequel le système (1) de production d'énergie comporte en outre en amont de la pile à combustible (71) un filtre de désulfuration passive (10) permettant d'éliminer les molécules soufrées présentes dans le gaz.

9. Système selon l'une quelconque des revendications 3 à 8, dans lequel le système (1) de production d'énergie comporte en outre un système d'évacuation ou un système de traitement des effluents produits par la pile à combustible.

**Patentansprüche**

1. Energiemanagementverfahren unter Verwendung eines Energieerzeugungssystems (1), das zum Verbinden mit einem Gasnetz (2) vorgesehen ist, wobei das Gas Erdgas, Flüssigerdgas, Verdampfungsgas aus LNG, Stadtgas, Biogas, Biomethan, synthetisches Methan oder Wasserstoff ist, wobei das Energieerzeugungssystem (1) umfasst:

- eine Gaseinlassleitung (4) aus dem Netz (2) in dem Energieerzeugungssystem (1),
- eine Abwasserabführleitung (5),
- eine Energieerzeugungseinheit (7), umfassend eine Festoxidbrennstoffzelle (SOFC) (71), die

    ◦ über einen Bypass (41), der mit der Einlassleitung (4) verbunden ist, mit Gas versorgt wird, und
    ◦ über eine Lufteinlassleitung (8) mit Sauerstoff versorgt wird,

- ein wiederaufladbares elektrisches Energiespeichersystem (72), das der Brennstoffzelle (71) zugeordnet ist, wobei das Energieerzeugungssystem kontinuierlich einen Energieverbraucher versorgt, der im Durchschnitt eine Leistung zwischen 1 mW und 100 mW verbraucht,
- ein Managementmodul (9) mit einer Managementvorrichtung (91) der Brennstoffzelle (71) und einer elektronischen Managementvorrichtung (92) des elektrischen Speichersystems (72), um dessen Ladung zu steuern,

wobei das Verfahren **dadurch gekennzeichnet ist, dass** das Managementmodul (9) die Brennstoffzelle (71) startet, wenn das elektrische Energiespeichersystem (72), das eine Energie zwischen 0,1 Wh und 100 Wh aufweist, bis zu einem vorbestimmten Schwellenwert entladen ist, und

**dadurch, dass** die Brennstoffzelle (71) auf intermittierende Weise arbeitet, nur um das wiederaufladbare elektrische Speichersystem (72) wieder aufzuladen.

2. Verfahren nach Anspruch 1, wobei das Managementmodul (9) die Brennstoffzelle (71) startet, wenn das elektrische Energiespeichersystem (72) bis zu einem Schwellenwert zwischen 60 und 99 % der Speicherkapazität entladen ist, und zwar für eine Versorgungsdauer zwischen 5 und 20 Jahren.

3. Energieerzeugungssystem (1), das zum Verbinden mit einem Gasnetz (2) vorgesehen ist, wobei das Gas Erdgas, Flüssigerdgas, Verdampfungsgas aus LNG, Stadtgas, Biogas, Biomethan, synthetisches Methan oder Wasserstoff ist, wobei das Energieerzeugungssystem (1) umfasst:

- eine Gaseinlassleitung (4) aus dem Netz (2) in dem Energieerzeugungssystem (1),
- eine Abwasserabführleitung (5),
- eine Energieerzeugungseinheit (7), umfassend eine Festoxidbrennstoffzelle (SOFC) (71), die

  ∘ über einen Bypass (41), der mit der Einlassleitung (4) verbunden ist, mit Gas versorgt wird, und
  ∘ über eine Lufteinlassleitung (8) mit Sauerstoff versorgt wird,

- ein wiederaufladbares elektrisches Energiespeichersystem (72), das der Brennstoffzelle (71) zugeordnet ist, wobei das Energieerzeugungssystem kontinuierlich einen Energieverbraucher versorgt, der im Durchschnitt eine Leistung zwischen 1 mW und 100 mW verbraucht,
- ein Managementmodul (9) mit einer Managementvorrichtung (91) der Brennstoffzelle (71) und einer elektronischen Managementvorrichtung (92) des elektrischen Speichersystems (72), um dessen Ladung zu steuern, wobei das System **dadurch gekennzeichnet ist, dass** das Managementmodul (9) konfiguriert ist, um die Brennstoffzelle (71) zu starten, wenn das elektrische Energiespeichersystem (72), das eine Energie zwischen 0,1 Wh und 100 Wh aufweist, bis zu einem vorbestimmten Schwellenwert entladen ist, und damit die Brennstoffzelle (71) auf intermittierende Weise arbeitet, nur um das wiederaufladbare elektrische Speichersystem (72) wieder aufzuladen.

4. System nach Anspruch 3, wobei die Brennstoffzelle (71) ein Wärmedämmsystem (14) und ein Heizsystem (11) zum Erwärmen der Brennstoffzelle (71) aufweist.

5. System nach Anspruch 4, wobei die Brennstoffzelle (71) eine röhrenförmige (711) oder eine mikroröhrenförmige Struktur (712) aufweist.

6. System nach einem der Ansprüche 3 bis 5, wobei die elektronische Managementvorrichtung (92) des elektrischen Energiespeichersystems (72) ferner konfiguriert ist, um die Fluidversorgung der Brennstoffzelle (71) und die elektrische Energieversorgung des Energieverbrauchers wie folgt zu verwalten:
die elektronische Managementvorrichtung (92) löst das Einschalten der Brennstoffzelle (71) aus, wenn die Kapazität des elektrischen Energiespeichersystems bis zu einem vorbestimmten Schwellenwert entladen ist, und zwar für eine Versorgungsdauer zwischen 5 und 20 Jahren.

7. System nach Anspruch 6, wobei die elektronische Managementvorrichtung (92) konfiguriert ist, um das Einschalten der Brennstoffzelle (71) auszulösen, wenn die Kapazität des elektrischen Energiespeichersystems bis zu einem Schwellenwert zwischen 60 und 99 % der Speicherkapazität entladen ist, und zwar für eine Versorgungsdauer zwischen 5 und 20 Jahren.

8. System nach einem der Ansprüche 3 bis 7, wobei das Energieerzeugungssystem (1) ferner stromaufwärtig von der Brennstoffzelle (71) einen passiven Entschwefelungsfilter (10) aufweist, der das Entfernen von im Gas vorhandenen Schwefelmolekülen ermöglicht.

9. System nach einem der Ansprüche 3 bis 8, wobei das Energieerzeugungssystem (1) ferner ein System zum Abführen oder ein System zum Behandeln der von der Brennstoffzelle erzeugten Abwässer aufweist.

**Claims**

1. Energy management method using an energy production system (1) intended for connection to a gas network (2), said gas being natural gas, liquefied natural gas, LNG evaporation gas, town gas, biogas, biomethane, synthetic methane or hydrogen, said energy production system (1) comprising

   - a gas intake duct (4) from said network (2) into said energy production system (1),
   - an effluent discharge pipe (5),
   - an energy production unit (7) comprising a solid oxide fuel cell (71) SOFC, which is

     ∘ supplied with gas via a bypass (41) connected to said intake duct (4), and
     ∘ supplied with oxygen by an air intake duct (8),

   - a rechargeable electrical energy storage system (72) associated with said fuel cell (71),
   said energy production system continuously supplying an energy consumer consuming on average between 1 mW and 100 mW of power,
   - a management module (9) comprising a management device (91) for said fuel cell (71) and an electronics management device (92) for said electrical storage system (72) to control charging thereof,

   said method being **characterized in that** the management module (9) starts the fuel cell (71) when the electrical energy storage system (72), having an energy between 0.1 Wh and 100 Wh, is discharged up to a predetermined threshold, and **in that** the fuel cell (71) operates intermittently, only to recharge the rechargeable electrical storage system (72).

2. Method according to claim 1, wherein the management module (9) starts the fuel cell (71) when the electrical energy storage system (72) is discharged up to a threshold of between 60 and 99% of the storage capacity, for a supply period of between 5 and 20 years.

3. Energy production system (1) intended for connection to a gas network (2), said gas being natural gas, liquefied natural gas, LNG evaporation gas, town gas, biogas, biomethane, synthetic methane or hydrogen, said energy production system (1) comprising:

   - a gas intake duct (4) from said network (2) into said energy production system (1),
   - an effluent discharge pipe (5),
   - an energy production unit (7) comprising a solid oxide fuel cell (71) SOFC, which is

     ∘ supplied with gas via a bypass (41) connected to said intake duct (4), and
     ∘ supplied with oxygen by an air intake duct (8),

   - a rechargeable electrical energy storage system (72) associated with said fuel cell (71),
   said energy production system continuously supplying an energy consumer consuming on average between 1 mW and 100 mW of power,
   - a management module (9) comprising a management device (91) for said fuel cell (71) and an electronics management device (92) for said electrical storage system (72) to control charging thereof,

   said system being **characterized in that** the management module (9) is configured to start the fuel cell (71) when the electrical energy storage system (72), having an energy between 0.1 Wh and 100 Wh, is discharged up to a predetermined threshold and such that the fuel cell (71) operates intermittently, only to recharge the rechargeable electrical storage system (72).

4. System according to claim 3, wherein the fuel cell (71) comprises a thermal insulation system (14) and a heating system (11) for heating said fuel cell (71).

5. System according to claim 4, wherein the fuel cell (71) comprises a tubular (711) or microtubular (712) structure.

6. System according to any of claims 3 to 5, wherein said electronics management device (92) of said electrical energy storage system (72) is further configured to manage the supply of fluid to the fuel cell (71) and the supply of electrical energy to the energy consumer as follows:
said electronics management device (92) triggers the start-up of the fuel cell (71) when the capacity of the electrical energy storage system is discharged up to a predetermined threshold, for a supply period of between 5 and 20 years.

7. System according to claim 6, wherein said electronics management device (92) is configured to trigger the start-up of the fuel cell (71) when the capacity of the electrical energy storage system is discharged up to a threshold of between 60 and 99% of the storage capacity, for a supply period of between 5 and 20 years.

8. System according to any of claims 3 to 7, wherein the energy production system (1) further comprises, upstream of the fuel cell (71), a passive desulfurization filter (10) for removing sulfur molecules present in the gas.

9. System according to any of claims 3 to 8, wherein the energy production system (1) further comprises a system for discharging or a system for treating effluent produced by the fuel cell.

**FIG. 1**

711

7110

7112

7111

FIG. 2a

7111

7110

7112

FIG. 2b

7112

7110

7111

FIG. 2c

7110

7112

7111

FIG. 2d

FIG. 2

**FIG. 3**

**FIG. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110300457 A
- US 5332630 A

- WO 2007142169 A